# EUROPÄISCHE PATENTSCHRIFT

(11) **EP 0 733 915 B1**
(45) Veröffentlichungstag und Bekanntmachung des Hinweises auf die Patenterteilung: **27.12.2000**
(21) Anmeldenummer: 95112427.0
(22) Anmeldetag: 08.08.1995
(51) Int. Cl.: G01V 3/10

(54) **Verfahren und Messeinrichtung zur Metalldetektion mittels einer Spulenanordnung mit mehreren separat ansteuerbaren Bereichen**
Method and apparatus for metal detection using a coil arrangement with several separate controllable regions
Procédé et dispositif pour la détection de métal au moyen d'un pluralité des bobines activées sélectivement

(30) Priorität: 23.03.1995 DE 19510506
(43) Veröffentlichungstag der Anmeldung: 25.09.1996
(73) Patentinhaber: Vallon GmbH, D-72800 Eningen (DE)
(72) Erfinder: Keller, Helmut, D-72076 Tübingen (DE)
(74) Vertreter: Klocke, Peter, Dipl.-Ing.

(56) Entgegenhaltungen:
- EP-A- 0 323 713
- US-A- 4 605 898
- US-A- 4 866 424
- PATENT ABSTRACTS OF JAPAN vol. 010, no. 110 (P-450), 24.April 1986 & JP 60 239682 A (MITSUBISHI DENKI KK), 28.November 1985,

## Beschreibung

Die Erfindung betrifft ein Verfahren zur Metalldetektion gemäß der Gattung des Anspruchs 1 sowie eine Meßeinrichtung gemäß der Gattung des Anspruchs 6.

Im Rahmen der Sicherheitsüberwachung auf Flughäfen werden Torrahmen verwendet, die in den Rahmenseitenteilen Spulenanordnungen zur Metalldetektion aufweisen. Personen, die durch den Torrahmen hindurchgehen, können daraufhin überprüft werden, ob diese Personen metallische Gegenstände mitführen. Wird ein metallischer Gegenstand erkannt, so löst die mit der Spulenanordnung des Torrahmens in Verbindung stehende Meßeinrichtung ein akustisches und/oder visuelles Signal aus.

Um nicht nur das Vorhandensein eines metallischen Gegenstandes feststellen zu können, sondern auch eine Aussage darüber machen zu können, wo sich der festgestellte metallische Gegenstand in dem vom Torrahmen umschlossenen Raum befindet, kann die Spulenanordnung in unterschiedliche, separat ansteuerbare Bereiche unterteilt werden. Die Sendespulen und Empfangsspulen der unterschiedlichen Bereiche können dann separat angesteuert bzw. ausgewertet werden, so daß festgestellt werden kann, in welchem räumlichen Bereich sich ein detektierter metallischer Gegenstand befindet. Die Ansteuerung der unterschiedlichen Sendespulen kann bei einer solchen Spulenanordnung zeitlich versetzt erfolgen, um auf diesem Wege eine räumliche Zuordnung bezüglich der empfangenen Meßsignale zu ermöglichen. Die zeitlich versetzte Ansteuerung der unterschiedlichen Sendespulen hat jedoch den Nachteil, daß immer nur gerade der räumliche Bereich innerhalb des Torrahmens überwacht wird, dessen zugehörige Sendespule gerade angesteuert wird. Bewegt sich eine Person relativ schnell durch den Torrahmen hindurch, so kann ein mitgeführter metallischer Gegenstand möglicherweise nicht erkannt werden, da er durch einen räumlichen Bereich hindurch bewegt wurde, dessen zugehörige Sendespulen gerade nicht angesteuert wurden. Sollen zum Beispiel in einem Raum 5 Metalldetektoren mit je 20 Spulen verwendet werden, so reduziert sich die Pulswiederholrate einer jeden Spule um den Faktor 5 x 20 = 100 bzgl. der einer Einzelspulenanordnung. Das Nutz/Störverhältnis verschlechtert sich dabei um den Faktor √100 = 10.

Ein bekanntes Meßverfahren mit elektronischer Objektanalyse ist aus der Fachzeitschrift Frequenz, 22 (1968) 10, S. 300-305 in dem Artikel "Ein neuartiges Metallsuchgerät nach dem Pulsverfahren für große Geländeflächen mit elektronischer Objektanalyse und -auswahl" beschrieben.

Der Erfindung liegt die Aufgabe zugrunde, ein Verfahren zur Metalldetektion mittels einer Spulenanordnung anzugeben, mit dem die als Sendespulen dienenden Spulen der Spulenanordnung gleichzeitig ansteuerbar sind, wobei die Empfangssignale empfangsseitig dennoch den verschiedenen Sendespulen zugeordnet werden können.

Die Lösung dieser Aufgabe erhält man durch die im Anspruch 1 angegebenen Merkmale. Die beispielsweise in einem Torrahmen räumlich versetzt und vorzugsweise auch überlappend angeordneten Sendespulen werden mit Pulsfolgen unterschiedlicher Pulsmuster gleichzeitig angesteuert. Die empfangenen Meßsignale werden abgetastet und digitalisiert. Wird eine Sendespule beispielsweise mit einer Pulsfolge angesteuert, die aufeinanderfolgend einen ersten positiven Impuls, einen zweiten positiven Impuls, einen dritten negativen Impuls und einen vierten negativen Impuls aufweist, so kann empfangsseitig durch geeignete Gewichtung der vier Meßwerte mit dem selben Muster eine Bewertung der Meßsignale, die von dieser Sendespule herrühren, erfolgen. Die gesendeten Pulsfolgen können ein binär codiertes Pulsmuster aufweisen, und zwar in der Weise, daß jeder Sendespule ein charakteristisches Pulsmuster zugeordnet ist. Durch die Binärcodierung der von den Sendespulen abgestrahlten Signale läßt sich eine empfangsseitige Zuordnung der Meßsignale zu den unterschiedlichen Sendespulen und somit zu den zugehörigen räumlichen Bereichen innerhalb des Torrahmens vornehmen.

Besonders vorteilhaft ist es, die Pulsfolgen aus einer Folge von 2ⁿ (n = 1, 2,... ) Doppelimpulsen zusammenzustellen, wobei jeder Doppelimpuls aus einem positiven und einem negativen Einzelimpuls besteht. Dies hat den Vorteil, daß sich eine besonders einfache Zuordnung der Meßsignale einer Empfangsspule zu den Sendespulen ergibt. Die gesamte Pulsfolge hat eine gleiche Anzahl von positiven und negativen Einzelimpulsen.

Der Erfindung liegt auch die Aufgabe zugrunde, eine Meßeinrichtung mit Sende- und Empfangsspulen anzugeben, mit der die Sendespulen mit unterschiedlichen Pulsfolgen ansteuerbar sind und die empfangenen Meßsignale den unterschiedlichen Sendespulen zugeordnet werden können.

Die Lösung dieser Aufgabe erhält man durch die im Anspruch 6 angegebenen Merkmale. Jeder Empfangsspule ist eine Abtastschaltung zugeordnet, die aus dem empfangenen Signal einen oder mehrere Abtastwerte erzeugt. Über einen Multiplexer lassen sich die Abtastwerte nach einer A/D-Umwandlung in einem Mikroprozessor verarbeiten und können visuell und akustisch angezeigt werden.

Die Erfindung wird nachfolgend anhand von in der Zeichnung dargestellten Ausführungsbeispielen näher erläutert.

Es zeigen:
- Figur 1: einen Torrahmen mit in seinen Rahmenseiten kreuzweise angeordneten Sende-/Empfangsspulen,
- Figur 2: die Seitenansicht des Torrahmens von Figur 1,
- Figur 3: die Schmalseite einer Rahmenseite des Torrahmens von Figur 1,
- Figur 4: einzelne Spulenformen, die für die Sende-/Empfangsspulen im Torrahmen gemäß Figur 1 verwendbar sind,
- Figur 5: einen Torrahmen mit einer Spulenanordnung aus überlappenden Sende-/Empfangsspulen,
- Figur 6: die Seitenansicht des Torrahmens von Figur 5,
- Figur 7: die Schmalseite einer Rahmenseite des Torrahmens von Figur 5,
- Figur 8: eine Flachspule, wie sie im Torrahmen gemäß Figur 5 verwendet ist,
- Figur 9: ein Blockschaltbild der erfindungsgemäßen Meßein richtung,
- Figur 10: eine aus vier Doppelimpulsen bestehende Impuls folge zur Ansteuerung einer Sendespule und
- Figur 11: eine tragbare Flachspulenanordnung in der Draufsicht und in der Seitenansicht.

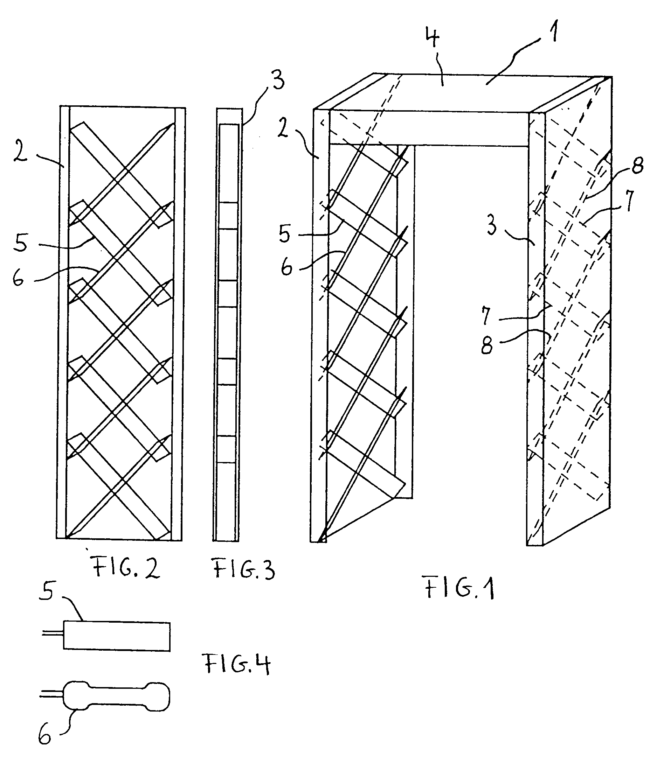

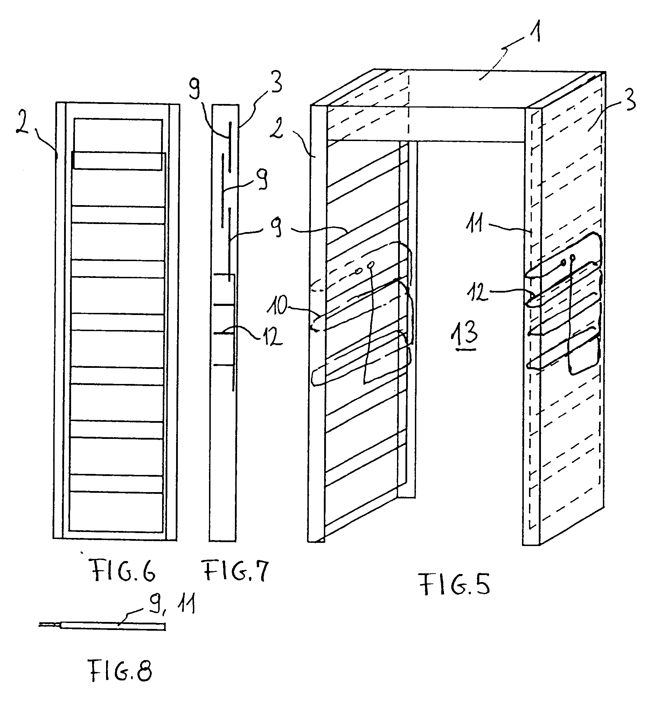

Der in Figur 1 dargestellte Torrahmen 1 besteht aus zwei Rahmenseiten 2, 3 und einem oberen Rahmenteil 4. In der linken Rahmenseite 2 sind jeweils als Sendespulen dienende Spulen 5, 6 angeordnet, während sich in der rechten Rahmenseite 3 als Empfangsspulen dienende Spulen 7, 8 befinden, die gleichermaßen wie die Spulen 5, 6 kreuzweise und überlappend angeordnet sind. Die Spulen jeder Seite sind nicht nur kreuzweise angeordnet, sondern stehen auch orthogonal aufeinander, d. h. daß beispielsweise die Spule 5 flach in der Rahmenseite 2 einliegt, während die Spule 6 zur Spule 5 senkrecht steht und die Spule 5 umgreift. Mögliche Spulenformen sind in Figur 4 angegeben.

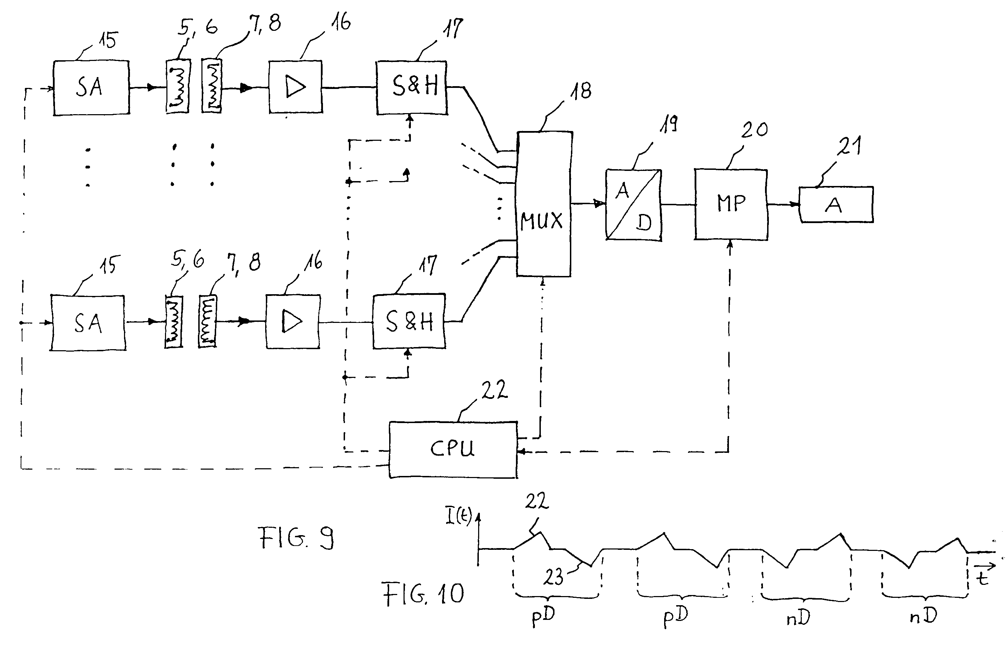

In Figur 9 sind die Spulen 5, 6 der Einfachheit halber als Sendespulen dargestellt und die Spulen 7, 8 als Empfangsspulen. Grundsätzlich können jedoch beide Spulen 5, 6 und 7, 8 als Sendespulen und als Empfangsspulen verwendet werden, sofern entsprechende Ansteuerungsmittel und Meßeinrichtungen den Spulen zugeordnet sind. So kann beispielsweise von einer zunächst als Sendespule abgestrahltes Signal als Meßsignal in dieser Spule empfangen werden, wenn die selbe Spule sowohl mit einer Spulenansteuerung 15 und mit einem Signalverstärker 16 und den weiteren zur Auswertung erforderlichen Einrichtungen verbunden ist. Der Einfachheit halber wurde auf eine zeichnerische Darstellung dieser Doppelfunktion als Sende- und Empfangsspulen in Figur 9 verzichtet.

In den Figuren 2 und 3 ist die Ausrichtung der Spulen in unterschiedlichen Ansichten nochmals dargestellt.

Der in Figur 5 dargestellte Torrahmen 1 enthält ebenfalls überlappende Sendespulen 9, 10 bzw. Empfangsspulen 11, 12. Die Spulen 9, 11 können als Flachspulen bezeichnet werden, während die Sendespule 10 und die Empfangsspule 12 als dazu orthogonal ausgerichtete Toroidspulen ausgeführt sind. In Figur 5 sind zwar nur jeweils eine Sendespule 10 und eine Empfangsspule 12 dargestellt, jedoch sind über die gesamte Länge der Rahmenseiten 2, 3 jeweils mehrere Toroidspulen verteilt angeordnet.

In Figur 6 ist keine Toroidspule dargestellt, während Figur 7 nur eine Toroidspule in Form der Empfangsspule 12 zeigt.

In Figur 8 ist eine als Flachspule ausgebildete Sendezpule 9 bzw. Empfangsspule 11 dargestellt. Die Toroidspulen - Sendespule 10 und Empfangsspule 12 - sind zur Erzeugung des senkrechten Feldverlaufs im Durchgangsbereich 13 des Torrahmens 1 verantwortlich, während die als Flachspulen ausgebildeten Sendespulen 9 insbesondere zur Erzeugung einer horizontalen Feldkomponente im Durchgangsbereich 13 dienen.

Das in Figur 9 dargestellte Blockschaltbild der erfindungsgemäßen Meßeinrichtung besitzt mehrere Sende-/Empfangseinrichtungen, die jeweils aus einer Spulenansteuerung 15, Sende- und Empfangsspulen 5, 6, bzw. 7, 8, einem Signalverstärker 16 und einer Abtastschaltung 17 bestehen. Die Abtastschaltungen 17, die im einfachsten Fall als Sample-and-Hold-Schaltungen ausgeführt werden, sind ausgangsseitig mit einem Multiplexer 18 verbunden, der die Abtastwerte über einen Analog-Digitalwandler 19 an einen Mikroprozessor 20 weitergibt. Dieser wertet die digitalisierten Abtastwerte aus und leitet daraus ein Meßergebnis ab, welches visuell und/oder akustisch mittels einer Anzeigeeinrichtung 21 angezeigt werden kann.

Es sind in Figur 9 nur die erste und die letzte Sende-/Empfangseinrichtungen dargestellt. Insgesamt sind so viele Sende- und Empfangseinrichtungen vorhanden, wie Spulen 5, 6 und 7, 8 in dem Torrahmen angeordnet sind. Über den Multiplexer 18 werden die gleichzeitig an den Abtastschaltungen 17 anliegenden Abtastwerte im Zeitmuliplexverfahren an den Analog-Digitalwandler 19 weitergegeben. Die Steuerung der Spulenansteuerungen 15 und der weiteren Einrichtungen der Meßeinrichtung wird von einer zentralen Steuerung 22 übernommen, die zu diesem Zweck über Steuerleitungen, die mit unterbrochenen Linien dargestellt sind, mit den unterschiedlichen Einrichtungen verbunden ist.

Figur 10 zeigt den zeitlichen Verlauf einer Pulsfolge, mit der eine Sendespule 5 angesteuert werden kann. Die Pulsfolge besteht aus vier Doppelimpulsen, wobei jeder Doppelimpuls aus einem positiven und einem negativen Einzelimpuls 22, 23 besteht. Ein Doppelimpuls, der mit einem positiven Einzelimpuls 22 beginnt, wird als positiver Doppelimpuls pD bezeichnet, während ein Doppelimpuls, der mit einem negativen Einzelimpuls beginnt, als negativer Doppelimpuls nD bezeichnet ist. Die dargestellte Pulsfolge lautet somit: pD - pD - nD - nD. Außerdem muß die Bedingung erfüllt sein, daß bei zwei unterschiedlichen Pulsfolgen an der Hälfte der Stellen übereinstimmende Doppelimpulse und an der Hälfte der Stellen nicht übereinstimmende Doppelimpulse auftreten.

An einem vereinfachten Beispiel soll nachfolgend die unterschiedliche Binärcodierung der Pulsfolgen erläutert werden.

### Beispiel:

In einem Torrahmen sollen vier Sendespulen und vier Empfangsspulen angeordnet sein. Die Sendespulen werden mit den nachfolgend angegebenen Pulsfolgen beaufschlagt:
1. Sendespule: pD - pD - pD - pD
2. Sendespule: pD - nD - pD - nD
3. Sendespule: pD - pD - nD - nD
4. Sendespule: pD - nD - nD - pD

Mittels der Abtastschaltung 17 wird die Impulsantwort, die von den Empfangsspulen 7, 8 empfangen wurde, abgetastet.

Die nachfolgenden Tabellen 1 und 2 geben zum einen die Abtastwerte Mᵢₖ an (Tabelle 1) und andererseits ein Berechnungsschema für die Berechnung der Sende-Empfangspfadwerte aus den Abtastwerten (Tabelle 2). In Tabelle 2 sind die Sende-Empfangspfadwerte mit SEPᵢₖ gekennzeichnet.

Bei der Tabelle 1 bedeutet M_{i,k}, die Meßspannung an der Abtastschaltung der i-ten Sende-/Empfangseinrichtung nach dem k-ten Doppelpuls. So enthält z. B. M_{3,2} den Spannungswert am Ausgang der Abtastschaltung der dritten Sende-/Empfangseinrichtung nach dem zweiten Doppelpuls.

In Tabelle 2 bezeichnet SEP_{i,k} den Sende-Empfangspfad, der durch die i-te Sendespule und die k-te Empfangsspule gebildet wird. So enthält z. B. der Wert SEP_{3,2} die Information, die durch Sendeimpulse der zweiten Spule und Abtastwerte der dritten Spule gebildet wird. Die unter den in der Tabelle 2 angegebenen Sendespulen aufgeführten Vorzeichenfolgen z. B. (+-+-), geben die Vorzeichen der Doppelimpulse der jeweiligen Pulsfolge an.

Befindet sich im Durchgangsbereich des Torrahmens kein metallischer Gegenstand, so ergeben alle Abtastwerte insgesamt ein Null-Signal. Sobald jedoch ein metallischer Gegenstand in den vom Feld durchfluteten Bereich des Torrahmens gebracht wird, verändern sich insbesondere die Sende-Empfangspfadwerte im Bereich der Sende-Empfangpfade, in denen sich der metallische Gegenstand befindet, so daß daraus auch abgeleitet werden kann, wo sich der metallische Gegenstand befindet.

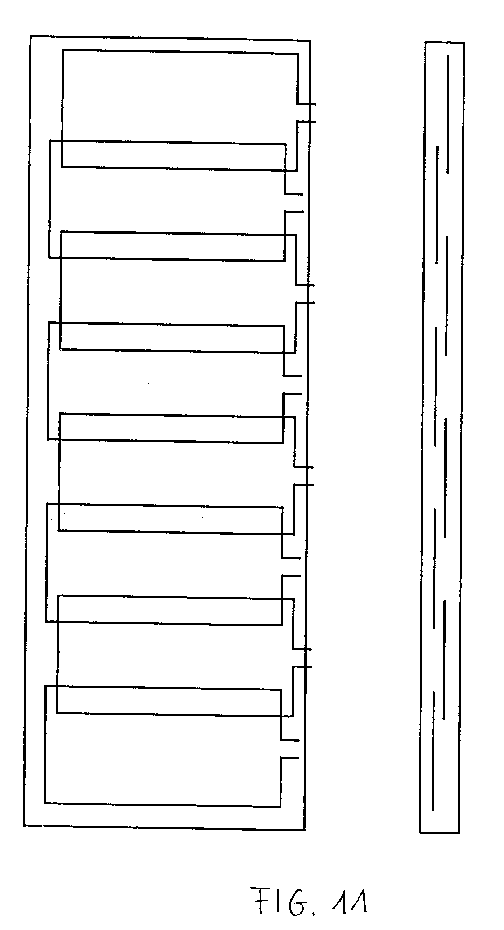

Es wird ausdrücklich darauf hingewiesen, daß der Erfindungsgegenstand nicht nur in Torrahmen zur Personenkontrolle Verwendung finden kann sondern beispielsweise auch an bewegten Metalldetektoren, mit denen im Erdreich befindliche metallische Gegenstände detektiert werden können. Die Spulenanordnung befindet sich dann in einem einzigen Tragerahmen, wobei die Spulen vorzugsweise sowohl als Sendespulen und als Empfangsspulen verwendet werden. Eine solche Spulenanordnung, die auch als Flachspulenanordnung bezeichnet werden kann, zeigt Figur 11.

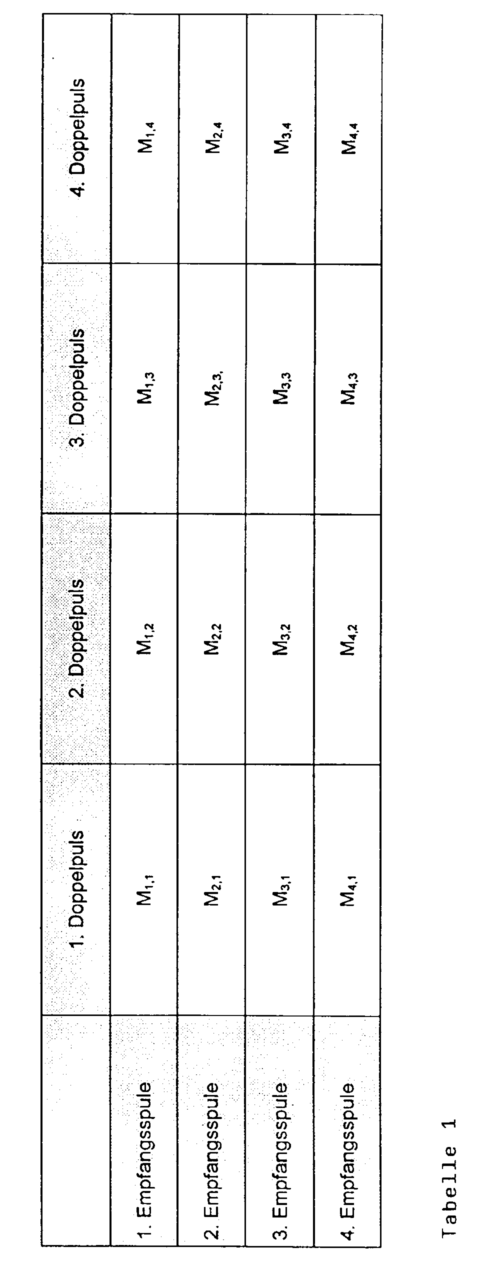

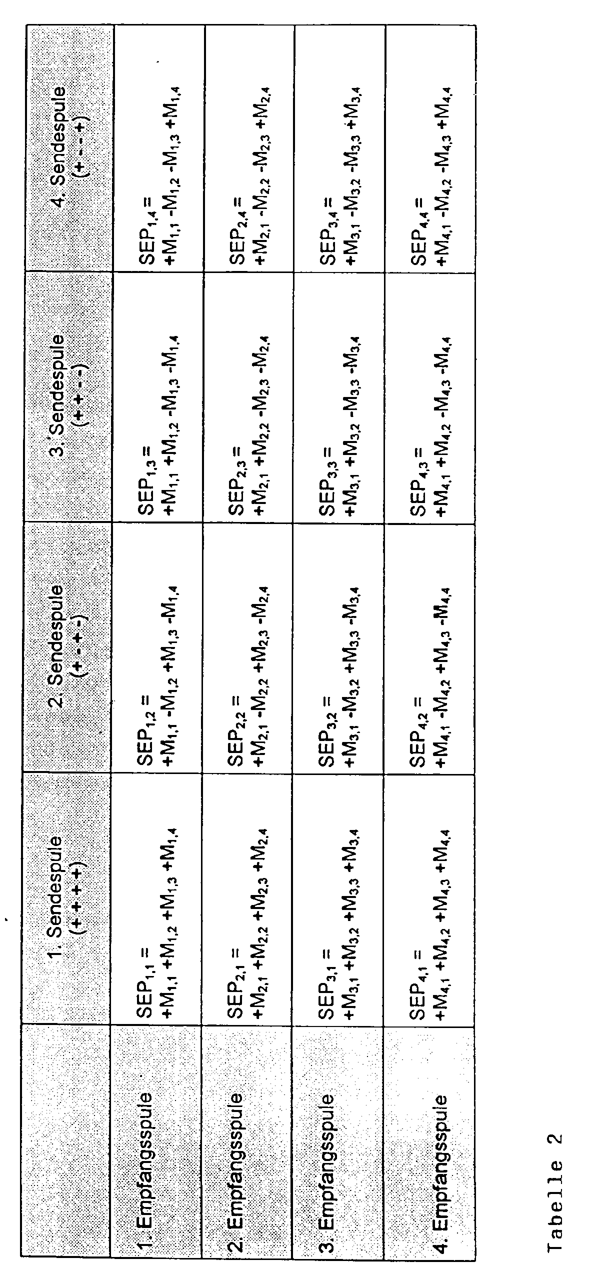

## Patentansprüche

1. Verfahren zur Metalldetektion mittels einer mehrere räumlich versetzt angeordnete Spulen umfassenden Spulenanordnung mit mehreren, separat ansteuerbaren Bereichen zur Erzeugung von Magnetfeldern, wobei die Spulen einerseits Sendespulen und andererseits Empfangsspulen sind, die zur Detektion von metallischen Gegenständen individuell über eine Meßelektronik ansteuerbar bzw. abtragbar sind, **dadurch gekennzeichnet,** daß mehrere Spulen (5, 6) mit Pulsfolgen bekannter, aber jeweils unterschiedlicher Pulsmuster gleichzeitig angesteuert werden und daß die mit diesen Spulen und/oder mit den übrigen Spulen empfangenen Pulsfolgen abgetastet und mit Abtastmustern bewertet werden, welche jeweils den zur Ansteuerung verwendeten Pulsmustern der sendeseitigen Pulsfolgen entsprechen.

2. Verfahren nach Anspruch 1, **dadurch gekennzeichnet,** daß die Pulsmuster der sendeseitigen Pulsfolgen aus mehreren aufeinanderfolgenden Doppelimpulsen bestehen, wobei ein Doppelimpuls aus einem positiven und einem dazu zeitlich versetzten negativen Einzelimpuls (22; 23) besteht.

3. Verfahren nach Anspruch 2, **dadurch gekennzeichnet,** daß Doppelimpulse innerhalb einer Pulsfolge, die mit einem negativen Einzelimpuls beginnen, als negative Doppelimpulse (nD) bezeichnet werden, während Doppelimpulse, die mit einem positiven Einzelimpuls beginnen, als positive Doppelimpulse (pD) bezeichnet werden, und daß das zu einer Pulsfolge gehörende charakteristische Pulsmuster durch eine individuelle Folge von positiven und negativen Doppelimpulsen charakterisiert ist.

4. Verfahren nach Anspruch 3, **dadurch gekennzeichnet,** daß die unterschiedlichen Pulsfolgen unterschiedlich binärcodierte Pulsfolgen aufweisen.

5. Verfahren nach einem der vorhergehenden Ansprüche, **dadurch gekennzeichnet,** daß mehrere, synchronisierte Detektionsanlagen mit jeweils mehreren unterschiedlichen Pulsfolgen angesteuert werden, so daß eine gegenseitige Beeinflußung verhindert wird.

6. Meßeinrichtung mit Sende- und Empfangsspulen zur Durchführung des Verfahrens nach Anspruch 1, **dadurch gekennzeichnet,** daß jeder als Sendespule (5, 6) dienenden Spule eine Spulenansteuerung (15) zugeordnet ist, daß die Spulenansteuerung (15) von einer zentralen Steuereinheit (22) angesteuert wird, daß der Sendespule (5, 6) als Empfangsspulen (7, 8) zugeordnete Spulen das jeweils empfangene Signal an eine Abtastschaltung (17) liefern, die das empfangene Signal mit einem Abtastmuster abtastet, welches dem sendeseitigen Pulsmuster entspricht, daß die den Empfangsspulen (7, 8) zugeordneten Abtastschaltungen (17) ausgangsseitig mit dem Eingang eines Multiplexers (18) in Verbindung stehen, der die Abtastwerte der Abtastschaltungen (17) im Zeitmulitplexverfahren über einen Analog-Digitalwandler (19) einem Prozessor (20) zuführt, der die Abtastwerte auswertet und das Meßergebnis einer Anzeigeneinrichtung (21) zuführt.

## Claims

1. A method of metal detection using a coil arrangement comprising several regions that can be controlled separately for generating magnetic fields, where the coils are transmitting coils on the one hand and receiving coils on the other hand, which can be controlled and polled individually by an electronic measuring device for detection of metal objects, characterized in that several coils (5, 6) are controlled at the same time with pulse trains of a known but different pulse pattern each time, and the pulse trains received with these coils and/or with the other coils are sampled and evaluated with sampling patterns corresponding to the pulse patterns of the pulse trains used for control purposes on the transmission end.

2. The method according to claim 1, characterized in that the pulse trains on the transmission end are composed of multiple successive double pulses, where one double pulse consists of a positive individual pulse (22) and a negative individual pulse (23) at a time offset from the former.

3. The method according to claim 2, characterized in that double pulses within a pulse train beginning with a negative individual pulse are referred to as negative double pulses (nD), whereas double pulses beginning with a positive individual pulse are referred to as positive double pulses (pD), and the characteristic pulse pattern belonging to a pulse train is characterized by an individual sequence of positive and negative double pulses.

4. The method according to claim 3, characterized in that the different pulse trains have different binary coded pulse trains.

5. The method according to one of the preceding claims, characterized in that several synchronized detection systems are each controlled with several different pulse trains in such a way that any mutual influence is prevented.

6. The measurement device having transmitting coils and receiving coils for carrying out the method according to claim 1, characterized in that a coil control (15) is provided for each coil which functions as a transmitting coil (5, 6); the coil control (15) is controlled by a central control unit (22); coils assigned as receiving coils (7, 8) to the transmitting coil (5, 6) send the received signal to a sampling circuit (17) which samples the received signal with a sampling pattern corresponding to the pulse pattern at the transmitting end; the sampling circuits (17) assigned to the receiving coils (7, 8) at the output end are connected to the input of a multiplexer (18) which sends the samples of the sampling circuits (17) to a processor (20) over an analog-digital converter (19) in a time multiplex process, the processor analyses the samples and sends the measurement result to a display device (21).

## Revendications

1. Procédé pour la détection de métal au moyen d'un groupement de bobines comprenant plusieurs bobines décalées dans l'espace, avec plusieurs zones activées séparément pour la génération de champs magnétiques, les bobines étant d'une part des bobines émettrices et, de l'autre, des bobines réceptrices, lesquelles sont activables et interrogeables individuellement via un dispositif de mesure électronique, en vue de la détection d'objets métalliques, caractérisé en ce que plusieurs bobines (5, 6) ayant des trains d'impulsions connues mais répondant respectivement à des motifs d'impulsions différents sont activées simultanément, et en ce que les trains d'impulsions reçus avec ces bobines et/ou avec les autres bobines sont balayés et analysés avec des motifs d'impulsions qui correspondent respectivement aux motifs d'impulsions des trains d'impulsions côté émetteur utilisés pour l'activation.

2. Procédé selon la revendication 1, caractérisé en ce que les motifs d'impulsions des trains d'impulsion côté émetteur consistent en une pluralité d'impulsions doubles consécutives, une impulsion double comprenant une impulsion individuelle positive et une impulsion individuelle négative (22; 23) décalée dans le temps.

3. Procédé selon la revendication 2, caractérisé en ce que des impulsions doubles comprises dans un train d'impulsions commençant par une impulsion individuelle négative, sont qualifiées d'impulsions doubles négatives (nD), tandis que des impulsions doubles commençant par une impulsion individuelle positive, sont qualifiées d'impulsions doubles positives (pD), et en ce que le motif d'impulsions caractéristique faisant partie d'un train d'impulsions est caractérisé par une séquence individuelle d'impulsions doubles positives et négatives.

4. Procédé selon la revendication 3, caractérisé en ce que les différents trains d'impulsions présentent des trains d'impulsions codés sous forme binaire différenciée.

5. Procédé selon l'une des revendications qui précèdent, caractérisé en ce que plusieurs installations de détection synchronisées sont activées avec plusieurs trains d'impulsions respectivement différents, en sorte qu'une influence réciproque soit empêchée.

6. Dispositif de mesure avec bobines émettrices et réceptrices pour la mise en oeuvre du procédé selon la revendication 1, caractérisé chaque bobine servant de bobine émettrice (5, 6) se voit associer une commande de bobine (15), en ce que la commande de bobine (15) est activée par une unité de contrôle centrale (22), en ce que des bobines associées à la bobine émettrice (5, 6) en tant que bobines réceptrices (7, 8) envoient le signal reçu à un circuit d'exploration (17) qui balaie le signal reçu avec un motif d'exploration correspondant au motif d'impulsions côté émetteur, en ce que les circuits d'exploration (17) associés aux bobines réceptrices (7, 8) sont en communication, côté sortie, avec l'entrée d'un multiplexeur (18) qui adresse les valeurs explorées par les circuits d'exploration (17) à un processeur (20), via un convertisseur analogique/numérique (19), en suivant une procédure de multiplexage dans le temps, processeur qui analyse les valeurs explorées et envoie le résultat de la mesure à un dispositif indicateur (21).
